# FASCICULE DE BREVET EUROPEEN

(11) **EP 2 271 850 B1**
(45) Date de publication et mention de la délivrance du brevet: **31.10.2012**
(21) Numéro de dépôt: 09727393.2
(22) Date de dépôt: 18.03.2009
(51) Int. Cl.: F16B 5/04

(54) **PROCÉDÉ D'ASSEMBLAGE ENTRE UNE PIÈCE EN MATÉRIAU MÉTALLIQUE ET UNE PIÈCE EN MATÉRIAU COMPOSITE**
VERFAHREN ZUR MONTAGE EINES TEILS AUS METALLMATERIAL AN EINEM TEIL AUS VERBUNDMATERIAL
METHOD FOR ASSEMBLING A PIECE OF METAL MATERIAL TO A PIECE OF COMPOSITE MATERIAL

(30) Priorité: 28.03.2008 FR 0852016
(43) Date de publication de la demande: 12.01.2011
(73) Titulaire: Airbus Opérations SAS, 31060 Toulouse (FR)
(72) Inventeur: BIANCO, Stéphane, F-31500 Toulouse (FR); PINTO, Laurent, F-31470 Fonsorbes (FR)
(74) Mandataire: Schmit, Christian Norbert Marie
(86) Numéro de dépôt international: PCT/FR2009/050447
(87) Numéro de publication internationale: WO 2009/122092

(56) Documents cités:
- WO-A-2006/057592
- FR-A- 2 551 147

## Description

L'invention concerne un procédé d'assemblage entre une pièce en matériau métallique telle qu'un support métallique et une pièce en matériau composite telle qu'un panneau à structure sandwich, en particulier selon le préambule de la revendication 1. un tel procédé est connu du document FR-A-2 551 147.

D'une manière générale, l'invention trouve des applications dès lors qu'il est nécessaire d'assembler au moins une pièce en matériau métallique avec une pièce en matériau composite, en particulier pour des assemblages soumis à des sollicitations mécaniques significatives. L'invention trouve plus particulièrement des applications dans le domaine de l'aéronautique, dans lequel le procédé d'assemblage peut influencer la durée de vie en fatigue et la sécurité des structures aéronautiques. L'invention trouve également des applications dans le domaine des véhicules terrestres, pour l'assemblage des pièces destinées à former des structures légères.

Pour la suite de la description, les expressions "pièce en matériau métallique" et "pièce en matériau composite" sont désignées respectivement par les expressions "pièce métallique" et "pièce composite".

Il est connu d'utiliser un procédé d'expansion des alésages et de montage en interférence de fixation pour augmenter la durée de vie en fatigue dans un assemblage entre deux pièces métalliques. Ces procédés d'expansion et d'interférence induisent des contraintes résiduelles de compression à la surface de l'alésage et localement dans la pièce autour de l'évidement. Ces contraintes ont pour effet de retarder l'amorçage et la propagation de fissures de fatigue au voisinage immédiat de l'alésage. Il en résulte une augmentation de la durée de vie en fatigue.

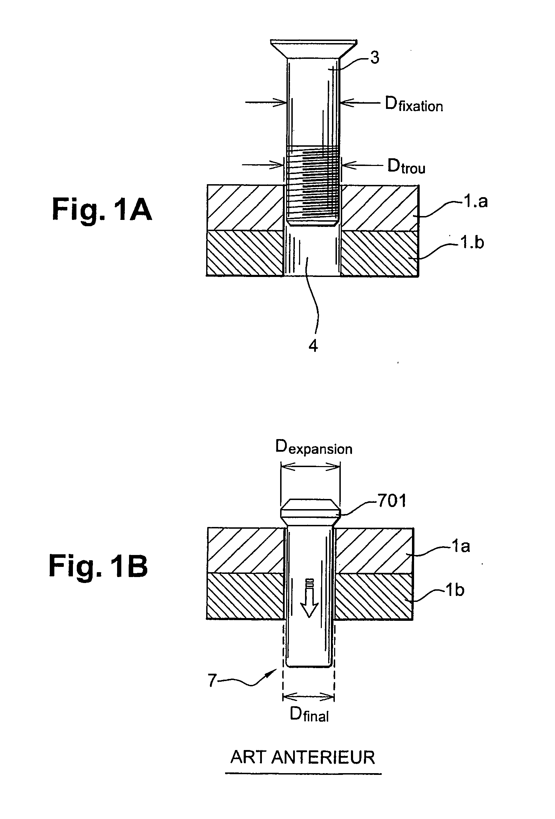

La figure 1.A illustre un procédé connu dit montage en interférence pour l'assemblage entre deux pièces métalliques 1a, 1 b. Il consiste à réaliser un trou 4 dans les deux pièces métalliques, le trou ayant un diamètre Dₜᵣₒᵤ inférieur au diamètre de fixation D_{fixation} qui est le diamètre de la tige de fixation. L'insertion de la fixation 3 dans le trou de fixation génère directement des contraintes de compression à la périphérie du trou.

La figure 1.B illustrent schématiquement un autre exemple de procédé connu dit procédé d'expansion pour générer des contraintes résiduelles de compression localement autour du trou de fixation 4 dans un assemblage d'une pièce métallique 1 a avec un deuxième pièce métallique 1b. On utilise un outil d'expansion 7. Le procédé comporte les étapes suivantes :
- on réalise un trou de fixation au moyen d'un outil d'alésage conventionnel dans les deux pièces métalliques, le diamètre du trou est choisi de telle sorte qu'il soit adapté au diamètre de l'outil d'expansion 7, c'est-à-dire le diamètre du trou Dₜᵣₒᵤ doit être légèrement inférieur au diamètre de l'outil d'expansion.
- on fait passer ensuite l'outil d'expansion 7 dit brunissoir au travers du trou réalisé à l'étape précédente, cet outil comporte une tête d'expansion 701 en forme d'olive ayant un diamètre Dₑₓₚₐₙₛᵢₒₙ supérieur au diamètre du trou de fixation Dₜᵣₒᵤ, son passage au travers du trou va exercer une action radiale sur la paroi interne du trou, générant ainsi des contraintes résiduelles de compression dans les deux pièces autour du trou, et enfin
- on réalèse le trou de fixation pour adapter le diamètre du trou au diamètre de la tige de fixation, puis on pose la fixation pour maintenir l'assemblage des deux pièces.

Les deux procédés existants permettent de générer des contraintes afin d'augmenter la durée de vie en fatigue au niveau de ces zones travaillantes, critiques en raison d'initiation de criques dans des zones chargées.

Dans le cadre de l'assemblage entre une pièce métallique et une pièce composite, on ne peut plus appliquer les procédés tels que décrits ci-dessus qui risqueraient d'endommager fortement la pièce composite.

Les pièces en matériau composite présentent des propriétés exceptionnelles en terme de résistance à la fatigue mécanique et une forte rigidité tout en conférant une très faible masse aux structures. Ces pièces sont notamment mises en oeuvre dans l'industrie aéronautique, y compris dans des structures fortement chargées. Cependant, l'assemblage de ces pièces composites pose des problèmes spécifiques par rapport au cas des pièces métalliques.

En effet les pièces composites sont constituées de structures obtenues par stratification de fibres imprégnées de résine, par exemple de fibres de carbone imprégnées d'une résine epoxy. Une telle pièce composite présente des propriétés structurales avantageuses dans le plan des strates de fibres mais est sensible à des phénomènes de délamination dans une direction perpendiculaire aux plans, c'est-à-dire dans la direction de l'épaisseur des pièces, la direction utilisée pour poser la fixation.

Les efforts de compression exercés par les moyens de fixation peuvent engendrer le phénomène de délaminage au niveau du trou. De manière générale pour éviter ce phénomène de délaminage, on doit minimiser les contraintes qui apparaissent au niveau de la zone de fixation, c'est-à-dire à l'interface entre la paroi interne du trou de fixation et l'organe de fixation. Pour cela, et contrairement au cas d'un assemblage d'une pièce métallique avec une autre pièce métallique, on réalise généralement un trou de fixation ayant un diamètre légèrement supérieur au diamètre de la fixation de manière à laisser un jeu suffisant entre la paroi interne du trou et la surface extérieure de la fixation pour éviter les interférences.

Dans les structures aéronautiques, la coexistence des pièces métalliques et composites conduit à de fréquents assemblages de pièces métalliques avec des pièces composites. Il peut s'agir de jonctions entre deux panneaux de structures différentes ou de renforts locaux, par exemple des nervures, ou des raidisseurs métalliques sur un panneau composite.

Dans un tel assemblage, soit il est choisi un assemblage comportant un jeu entre la paroi des trous et une fixation et le montage est alors défavorable à la pièce métallique en terme de durée de vie en fatigue, soit il est choisi un assemblage avec interférence et un tel montage risque d'endommager la pièce composite.

Une solution consisterait à réaliser indépendamment dans la pièce métallique et dans la pièce composite qui sont deux pièces distinctes un trou pour la fixation, puis de générer dans la pièce métallique des contraintes résiduelles de compression en absence de la pièce composite, puis dans un second temps de placer la pièce composite contre la pièce métallique pour l'assemblage. Cette solution n'est pas satisfaisante; en effet dans ce cas, il faut prédéterminer précisément les positions des trous afin qu'ils soient alignés lors de l'assemblage pour le passage de la fixation. Cet alignement n'est pas réalisable industriellement.

Une autre solution proposée dans une demande antérieure non publiée consiste à réaliser dans la pièce métallique et dans la pièce composite un trou de fixation, puis d'effectuer un nouveau alésage dans le trou du côté de la pièce composite de manière à obtenir un diamètre intérieur plus grand que le diamètre de l'outil d'expansion. De ce fait, l'existence de deux diamètres intérieurs dans le trou de fixation permet de générer uniquement des contraintes résiduelles de compression dans la pièce métallique.

Toutefois cette solution impose d'avoir un accès du côté de la pièce composite voir même un accès de chaque côté.

L'objectif de la présente invention cherche donc à résoudre un problème d'assemblage entre une pièce métallique et une pièce composite au moyen d'une fixation sans pénaliser la durée de vie en fatigue de la pièce métallique et sans endommager la pièce composite.

Un autre but de la présente invention est de pouvoir proposer une solution qui puisse être mise en oeuvre même dans le cas où il n'y a qu'un accès côté pièce métallique.

A cet effet, l'invention a donc pour objet un procédé d'assemblage entre une pièce en matériau métallique et une pièce en matériau composite, l'assemblage entre lesdites pièces étant réalisé au moyen d'un organe de fixation.

Selon l'invention, le procédé comporte les étapes suivantes dans lesquelles :
- on réalise un pré-perçage dans les deux pièces de manière à former un évidement de diamètre D1 dans la pièce en matériau métallique et dans la pièce en matériau composite,
- on met en place un insert ayant un diamètre variable dans la direction de l'épaisseur des pièces dans ledit évidement, ledit insert comportant un corps principal creux et au moins une bride destinée à venir au moins partiellement en appui contre la face externe d'une pièce, ledit insert étant destiné à recevoir l'organe de fixation,
- on génère par expansion radiale sur la paroi interne de l'insert au moyen d'un outil d'expansion ayant un diamètre extérieur coopérant avec le diamètre intérieur de l'insert, des contraintes résiduelles de compression dans au moins une zone des deux pièces le long de la circonférence de l'insert,
- on réalèse l'évidement du corps principal de l'insert de sorte que l'insert a un diamètre intérieur final D_{final} sensiblement supérieur au diamètre extérieur de l'organe de la fixation de manière à laisser un jeu entre la paroi interne de l'insert et la surface extérieure de l'organe de fixation, et
- on positionne l'organe de fixation dans l'insert pour maintenir la pièce métallique et la pièce composite ensemble.

L'invention concerne également une utilisation du procédé tel que décrit ci-dessus pour réaliser la fixation d'une pièce en matériau composite telle qu'un panneau à structure sandwich sur une pièce en matériau métallique telle qu'un support de panneau pour réaliser une structure d'aéronef.

L'invention sera mieux comprise à la lecture de la description qui suit et à l'examen des figures qui l'accompagnent. Celles-ci sont présentées à titre indicatif et nullement limitatif de l'invention. Les figures représentent :
- Figure 1.A : une vue en coupe d'un assemblage entre deux pièces métalliques mettant en oeuvre un procédé de montage en interférence de l'art antérieur ;
- Figure 1.B : une vue en coupe d'un assemblage entre deux pièces métalliques mettant en oeuvre un autre procédé de l'art antérieur ;
- Figure 2.A, Figure 2.B, Figure 2.C, Figure 2.D et Figure 2.E : les différentes étapes du procédé d'assemblage entre une pièce métallique et une pièce composite selon une première forme de réalisation de l'invention,
- Figure 3.A, Figure 3.B, Figure 3.C, Figure 3.D : les différentes étapes du procédé d'assemblage entre une pièce métallique et une pièce composite selon une deuxième forme de réalisation de l'invention.

Le procédé de la présente invention est applicable de manière générale à un assemblage entre une pièce métallique 1 et une pièce composite 2 qui sont des pièces distinctes et destinées à être maintenues l'une contre l'autre au moyen d'un organe de fixation positionné dans un alésage réalisé dans lesdites pièces.

Le concept principal de l'invention est de pouvoir générer préalablement à l'assemblage entre la pièce métallique et la pièce composite des contraintes dans la pièce métallique autour de l'alésage au moyen d'un procédé d'expansion sans endommager la pièce composite. La présence de ces contraintes permet d'augmenter la durée de vie en fatigue dans la pièce métallique et de retarder la propagation des fissures.

Pour ce faire il est impératif que l'étape du procédé d'expansion soit réalisée sans interférence avec la pièce composite afin d'éviter de créer des contraintes dans le volume de la pièce composite qui endommagerait la pièce composite.

En outre, ce procédé d'expansion doit pouvoir être mis en oeuvre même lorsqu'il y a seulement un accès du côté de la pièce métallique.

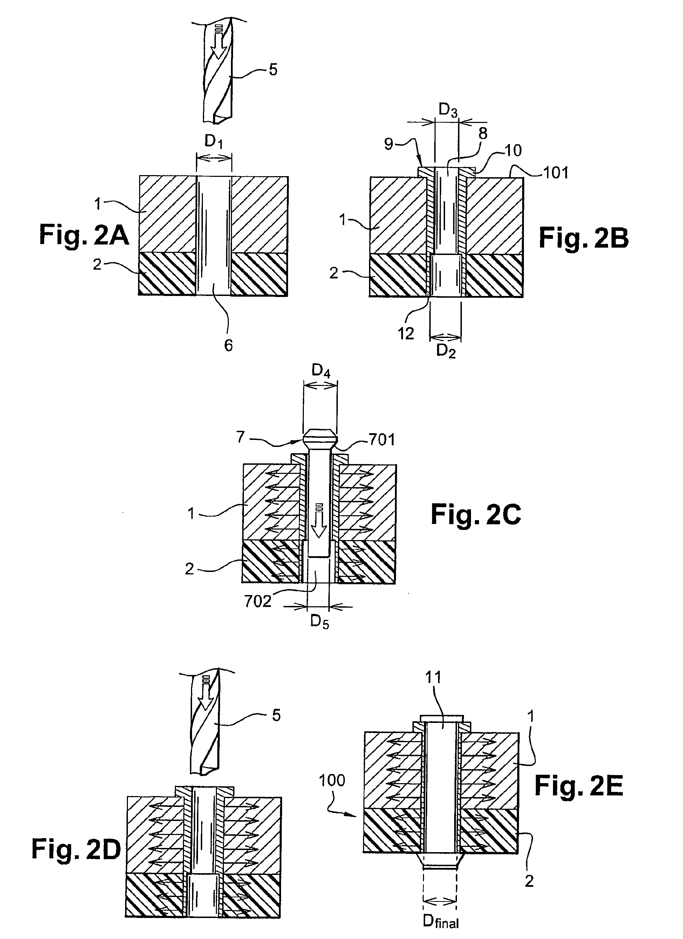

Sur les figures 2.A, 2.B, 2C, 2D et 2.E sont illustrées les différentes étapes d'un procédé d'expansion selon une première forme de réalisation de l'invention pour l'assemblage entre une pièce métallique 1 et une pièce composite 2 au moyen d'un organe de fixation 11. L'organe de fixation 11 est un boulon en acier ou en titane.

La pièce métallique 1 peut être réalisée, à titre d'exemple, dans un alliage d'aluminium et la pièce composite 2 dans un matériau composite comportant des fibres maintenues par une résine, par exemple des fibres de carbone.

A titre d'exemple, la pièce en matériau métallique 1 est un support métallique et la pièce en matériau composite 2 est un panneau à structure sandwich.

On réalise un pré-perçage dans les deux pièces 1, 2 de manière à former un évidement 6 de diamètre D1 dans la pièce en matériau métallique 1 et dans la pièce en matériau composite 2 (Figure 2.A). Ce pré-perçage est réalisé au moyen d'un outil d'alésage conventionnel 5.

On met en place ensuite un insert 9 ayant un diamètre variable dans la direction de l'épaisseur des pièces dans cet évidement 6 (Figure 2.B). L'insert comporte un corps principal creux 12 pour le passage de l'organe de fixation 11 et une bride 10 venant en appui contre la surface externe 101 de d'une des deux pièces. Dans l'exemple illustré sur la figure 2.B, la bride vient en appui contre la surface externe de la pièce métallique 1. Une couche adhésive peut être avantageusement disposée entre la bride et la surface externe de la pièce métallique de manière à s'assurer de la fixation de l'insert dans l'évidement.

Dans une forme variante de l'invention dans laquelle on a un accès de chaque côté de l'assemblage, l'insert peut comporter de part et d'autre du corps creux une bride qui vient en appui contre la surface externe des pièces.

La fonction de cet insert consiste à réaliser un interfaçage de l'outil d'expansion et des deux pièces.

Dans cette première forme de réalisation de l'invention, l'insert 9 comporte une partie inférieure ayant un diamètre intérieur D2 correspondant à la pièce en matériau composite 2 et une partie supérieure ayant un diamètre intérieur D3 correspondant à la pièce en matériau métallique 1 lorsque l'insert est positionné dans ledit évidement 6. Le diamètre intérieur D2 de la partie inférieure de l'insert est compris entre le diamètre de l'évidement D1 et le diamètre intérieur D3 de la partir supérieure de l'insert.

Selon cette première forme de réalisation de l'invention, on introduit un outil d'expansion 7 ayant un diamètre d'expansion D4 supérieur aux diamètres intérieurs D2 et D3 de l'insert (Figure 2.C). De ce fait, lorsqu'on l'introduit dans le corps creux 12 de l'insert, l'outil exerce une action radiale sur l'ensemble de la paroi interne de l'insert, générant ainsi des contraintes résiduelles de compression à la fois dans la pièce métallique et dans la pièce composite autour de l'insert. Le diamètre D2 étant très légèrement inférieur au diamètre D4, le taux d'expansion est plus important dans la pièce métallique que dans la pièce composite.

Ainsi par la présence de cet insert dont le diamètre varie dans la direction des épaisseurs des pièces, il est possible de contrôler le procédé d'expansion, et en particulier de privilégier le taux d'expansion dans la pièce métallique pour améliorer la durée de vie en fatigue tout en préservant la pièce composite des éventuelles délaminages.

La réalisation des contraintes résiduelles de compression dans les deux pièces préalablement à l'assemblage entre les deux pièces permet de réaliser des perçages dans la pièce métallique avec des diamètres supérieurs aux diamètres des organes de fixations, de façon à être compatible avec les tolérances de fabrication et, éventuellement, de permettre l'interchangeabilité des pièces.

Dans une étape finale (Figure 2.D et Figure 2.E), on réalèse l'évidement du corps principal 12 de l'insert de sorte que l'insert a un diamètre intérieur final D_{final} sensiblement supérieur au diamètre extérieur de l'organe de la fixation 11 de manière à laisser un jeu entre la paroi interne de l'insert et la surface extérieure de l'organe de fixation, et on positionne l'organe de fixation 11 dans l'insert pour maintenir la pièce métallique et la pièce composite ensemble pour réaliser

L'insert 9 est une pièce monobloc en matériau métallique dont le module élastique et la contrainte d'écoulement plastique sont supérieurs au module élastique et à la contrainte d'écoulement plastique de la pièce métallique de l'assemblage. De préférence, il est réalisé en acier, titane ou invar.

L'outil d'expansion 7 comporte un corps tubulaire 702 dont le diamètre extérieur D5 est inférieur aux diamètre intérieurs D2 et D3 de l'insert et une tête d'expansion 701 dont le diamètre externe D4 est dans cette forme de réalisation supérieur à la fois au diamètre intérieur D3 et au diamètre D4 de l'insert.

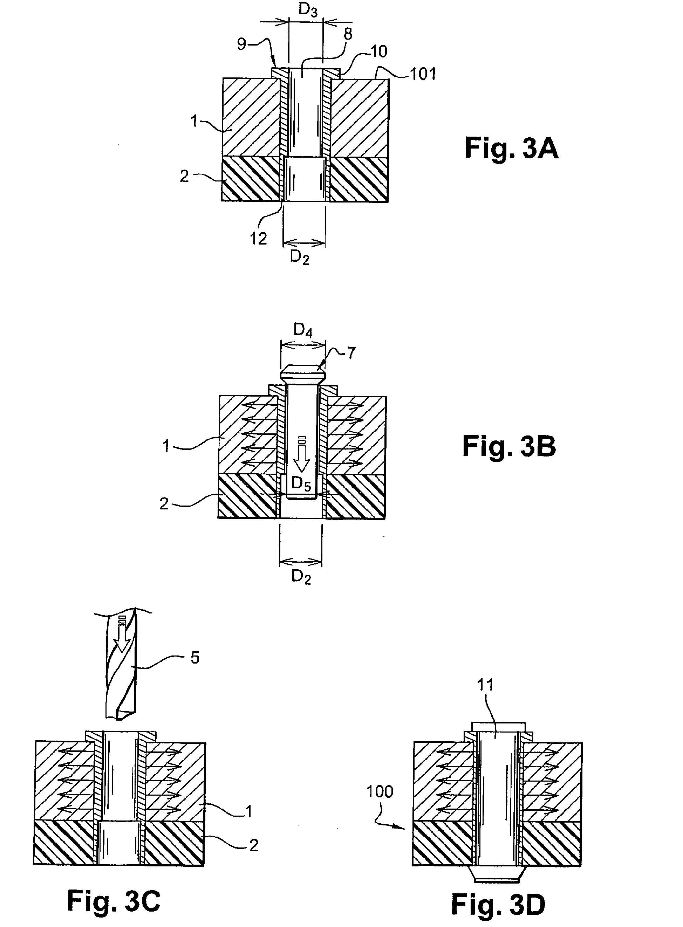

Les figures 3.A, 3.B, 3.C et 3.D illustrent une deuxième forme de réalisation de l'invention dans laquelle afin d'éviter tout risque de délaminage dans la pièce composite, le procédé de l'invention permet de ne pas expanser la pièce composite, mais uniquement la pièce métallique, c'est-à-dire de générer uniquement des contraintes résiduelles de compression dans la pièce métallique autour de l'insert.

Pour cela, on utilise un outil d'expansion 7 ayant un diamètre d'expansion D4 d'une part supérieur au diamètre intérieur D3, et d'autre part inférieur au diamètre intérieur D2. Ainsi lorsque l'outil traverse le corps creux de l'insert 11, il exerce uniquement une action radiale sur la partie supérieure de la paroi interne de l'insert correspondant à la pièce en matériau métallique 1, générant ainsi des contraintes résiduelles de compression uniquement dans la pièce en matériau métallique.

Le procédé décrit ci-dessus peut être utilisé pour fabriquer tout type de structures d'aéronef 100 ou de véhicules terrestres à partir de l'assemblage entre une pièce métallique telle qu'un support métallique et une pièce composite telle qu'un panneau à structure sandwich.

## Revendications

1. Procédé d'assemblage entre une pièce en matériau métallique (1) et une pièce en matériau composite (2), l'assemblage entre lesdites pièces étant réalisé au moyen d'un organe de fixation (11), selon lequel on réalise les étapes suivantes :
- on réalise un pré-perçage dans les deux pièces de manière à former un évidement (6) de diamètre D1 dans la pièce en matériau métallique (1) et dans la pièce en matériau composite (2),
- on met en place un insert (9) ayant un diamètre variable dans la direction de l'épaisseur des pièces dans ledit évidement (6), ledit insert (9) corportant un corps principal creux (12) et étant destiné à recevoir l'organe de fixation (11),
- on génère par expansion radiale sur la paroi interne de l'insert au moyen d'un outil d'expansion (7) ayant un diamètre extérieur coopérant avec le diamètre intérieur de l'insert, des contraintes résiduelles de compression dans au moins une zone des deux pièces le long de la circonférence de l'insert (9), et
- on positionne l'organe de fixation (11) dans l'insert pour maintenir la pièce métallique et la pièce composite ensemble, **caractérisé en ce que** :
- ledit insert comporte au moins une bride (10) destinée à venir au moins partiellement en appui contre la face externe (101) d'une pièce, et **en ce que**
- on réalèse l'évidement du corps principal (12) de l'insert de sorte que l'insert a un diamètre intérieur final D_{final} sensiblement supérieur au diamètre extérieur de l'organe de la fixation (11) de manière à laisser un jeu entre la paroi interne de l'insert et la surface extérieure de l'organe de fixation.

2. Procédé selon la revendication 1, **caractérisé en ce que** ledit insert (9) comporte une partie inférieure ayant un diamètre intérieur D2 correspondant à la pièce en matériau composite (2) et une partie supérieure ayant un diamètre intérieur D3 correspondant à la pièce en matériau métallique (1) lorsque l'insert est positionné dans ledit évidement (6), le diamètre intérieur D2 étant supérieur à D3 et compris entre la diamètre de l'évidement D1 et le diamètre intérieur D3 de la partir supérieure de l'insert (11).

3. Procédé selon la revendication 1 ou 2, **caractérisé en ce que** le diamètre d'expansion D4 de l'outil d'expansion (7) est supérieur aux diamètres intérieurs D2 et D3 de l'insert, de sorte que ledit outil exerce une action radiale sur l'ensemble de la paroi interne de l'insert, générant des contraintes résiduelles de compression dans la pièce en matériau métallique et dans la pièce en matériau composite, le taux d'expansion étant plus important dans la pièce métallique que dans la pièce composite.

4. Procédé selon la revendication 1 ou 2, **caractérisé en ce que** le diamètre d'expansion D4 de l'outil d'expansion (7) est d'une part supérieur au diamètre intérieur D3, d'autre part inférieur au diamètre intérieur D2, de sorte que ledit outil exerce uniquement une action radiale sur la partie supérieure de la paroi interne de l'insert correspondant à la pièce en matériau métallique, générant ainsi des contraintes résiduelles de compression uniquement dans la pièce en matériau métallique.

5. Procédé selon l'une des revendications 1 à 4, **caractérisé en ce que** ledit insert est une pièce monobloc en matériau métallique.

6. Procédé selon la revendication 5, **caractérisé en ce que** ledit matériau métallique est choisi dans le groupe comprenant l'acier, le titane, l'invar.

7. Procédé selon l'une des revendications 1 à 6, **caractérisé en ce que** ledit outil d'expansion comporte un corps tubulaire (702) dont le diamètre extérieur D5 est inférieur aux diamètre intérieurs D2 et D3 de l'insert et une tête d'expansion (701) dont le diamètre externe D4 est au moins supérieur au diamètre intérieur D3 de l'insert.

8. Procédé selon l'une des revendications précédentes, **caractérisé en ce que** la pièce en matériau métallique (1) est un support métallique et la pièce en matériau composite (2) est un panneau à structure sandwich.

9. Utilisation du procédé selon l'une quelconque des revendications précédentes pour assembler une pièce en matériau composite sur une pièce en matériau métallique pour réaliser une structure d'aéronef (100).

## Claims

1. Method of assembling a metal part (1) and a composite material part (2), said parts being assembled by means of a fixing member (11), wherein the following steps are carried out:
- the two parts are pre-drilled to form a recess (6) of diameter D1 in the metal part (1) and in the composite material part (2),
- an insert (9) having a diameter varying in the direction of the thickness of the parts is placed in said recess (6), said insert (9) including a hollow main body (12) and being intended to receive the fixing member (11),
- residual compression stresses are generated in at least one area of the two parts along the circumference of the insert (9) by radial expansion of the internal wall of the insert by means of an expansion tool (7) having an outside diameter cooperating with the inside diameter of the insert, and
- the fixing member (11) is positioned in the insert to hold the metal part and the composite part together, **characterized in that**:
- said insert includes at least one flange (10) intended to come at least partly to bear against the external face (101) of one part, and **in that**
- the recess in the main body (12) of the insert is rebored so that the insert has a final inside diameter D_{final} substantially greater than the outside diameter of the fixing member (11) to leave a clearance between the internal wall of the insert and the exterior surface of the fixing member.

2. Method according to Claim 1, **characterized in that** said insert (9) includes a lower part having an inside diameter D2 corresponding to the composite material part (2) and an upper part having an inside diameter D3 corresponding to the metal part (1) when the insert is positioned in said recess (6), the inside diameter D2 being greater than D3 and between the diameter D1 of the recess and the inside diameter D3 of the upper part of the insert (11).

3. Method according to Claim 1 or 2, **characterized in that** the expansion diameter D4 of the expansion tool (7) is greater than the inside diameters D2 and D3 of the insert, so that said tool exerts a radial action on the whole of the internal wall of the insert, generating residual compression stresses in the metal part and in the composite material part, the expansion ratio being greater in the metal part than in the composite part.

4. Method according to Claim 1 or 2, **characterized in that** the expansion diameter D4 of the expansion tool (7) is on the one hand greater than the inside diameter D3, on the other hand less than the inside diameter D2, so that said tool exerts only a radial action on the upper part of the internal wall of the insert corresponding to the metal part, thus generating residual compression stresses only in the metal part.

5. Method according to any one of Claims 1 to 4, **characterized in that** said insert is a one-piece metal part.

6. Method according to Claim 5, **characterized in that** said metal is chosen in the group comprising steel, titanium, invar.

7. Method according to any one of Claims 1 to 6, **characterized in that** said expansion tool includes a tubular body (702) the outside diameter D5 of which is less than the inside diameters D2 and D3 of the insert and an expansion head (701) the outside diameter D4 of which is at least greater than the inside diameter D3 of the insert.

8. Method according to any one of the preceding claims, **characterized in that** the metal part (1) is a metal support and the composite material part (2) is a sandwich structure panel.

9. Use of the method according to any one of the preceding claims for assembling a composite material part to a metal part to produce an airframe structure (100).

## Patentansprüche

1. Verfahren zur Montage eines Teils (1) aus Metallmaterial an einem Teil (2) aus Verbundmaterial, wobei die Montage der Teile aneinander mittels eines Befestigungselements (11) erfolgt, wobei die folgenden Schritte durchgeführt werden:
- Durchführen einer Vorbohrung in den beiden Teilen, so dass eine Ausnehmung (6) mit dem Durchmesser D1 in dem Teil (1) aus Metallmaterial und dem Teil (2) aus Verbundmaterial gebildet wird,
- Einsetzen eines Einsatzes (9) mit einem in der Dickenrichtung der Teile variablen Durchmesser in die Ausnehmung (6), wobei der Einsatz (9) einen hohlen Hauptkörper (12) umfasst und dazu bestimmt ist, das Befestigungselement (11) aufzunehmen,
- Erzeugen von Restdruckspannungen in mindestens einem Bereich der beiden Teile entlang dem Umfang des Einsatzes (9) durch radiales Spreizen an der inneren Wand des Einsatzes mittels eines Spreizwerkzeugs (7) mit einem äußeren Durchmesser, der mit dem inneren Durchmesser des Einsatzes zusammenwirkt, und
- Positionieren des Befestigungselements (11) in dem Einsatz, um das Metallteil und das Verbundteil zusammenzuhalten, **dadurch gekennzeichnet, dass**
- der Einsatz mindestens einen Flansch (10) umfasst, der dazu bestimmt ist, mindestens teilweise an der äußeren Fläche (101) eines Teils anzuliegen, und dass
- die Ausnehmung des Hauptkörpers (12) des Einsatzes so nachgebohrt wird, dass der Einsatz einen inneren Enddurchmesser D_{Ende} hat, der wesentlich größer als der äußere Durchmesser des Befestigungselements (11) ist, so dass zwischen der inneren Wand des Einsatzes und der äußeren Fläche des Befestigungselements Spiel bleibt.

2. Verfahren nach Anspruch 1, **dadurch gekennzeichnet, dass** der Einsatz (9) einen unteren Abschnitt mit einem inneren Durchmesser D2 umfasst, der dem Teil (2) aus Verbundmaterial entspricht, und einen oberen Abschnitt mit einem inneren Durchmesser D3, der dem Teil (1) aus Metallmaterial entspricht, wenn der Einsatz in die Ausnehmung (6) positioniert ist, wobei der innere Durchmesser D2 größer als D3 ist und zwischen dem Durchmesser D1 der Ausnehmung und dem inneren Durchmesser D3 des oberen Abschnitts des Einsatzes (9) liegt.

3. Verfahren nach Anspruch 1 oder 2, **dadurch gekennzeichnet, dass** der Spreizdurchmesser D4 des Spreizwerkzeugs (7) größer als die inneren Durchmesser D2 und D3 des Einsatzes ist, so dass das Werkzeug radial auf die gesamte innere Wand des Einsatzes einwirkt und Restdruckspannungen in dem Teil aus Metallmaterial und dem Teil aus Verbundmaterial erzeugt, wobei die Spreizrate im Metallteil höher ist als im Verbundteil.

4. Verfahren nach Anspruch 1 oder 2, **dadurch gekennzeichnet, dass** der Spreizdurchmesser D4 des Spreizwerkzeugs (7) einerseits größer als der innere Durchmesser D3 und andererseits kleiner als der innere Durchmesser D2 ist, so dass das Werkzeug nur auf den oberen Abschnitt der inneren Wand des Einsatzes, der dem Teil aus Metallmaterial entspricht, radial einwirkt und so nur im Teil aus Metallmaterial Restdruckspannungen erzeugt.

5. Verfahren nach einem der Ansprüche 1 bis 4, **dadurch gekennzeichnet, dass** es sich bei dem Einsatz um ein einteiliges Teil aus Metallmaterial handelt.

6. Verfahren nach Anspruch 5, **dadurch gekennzeichnet, dass** das Metallmaterial aus der Stahl, Titan und Invar umfassenden Gruppe ausgewählt ist.

7. Verfahren nach einem der Ansprüche 1 bis 6, **dadurch gekennzeichnet, dass** das Spreizwerkzeug einen rohrförmigen Körper (702), dessen äußerer Durchmesser D5 kleiner als die inneren Durchmesser D2 und D3 des Einsatzes ist, und einen Spreizkopf (701) umfasst, dessen äußerer Durchmesser D4 mindestens größer als der innere Durchmesser D3 des Einsatzes ist.

8. Verfahren nach einem der vorhergehenden Ansprüche, **dadurch gekennzeichnet, dass** es sich bei dem Teil (1) aus Metallmaterial um eine metallische Stütze und bei dem Teil (2) aus Verbundmaterial um eine Tafel mit Sandwich-Struktur handelt.

9. Verfahren nach einem der vorhergehenden Ansprüche zur Montage eines Teils aus Verbundmaterial an einem Teil aus Metallmaterial zur Realisierung einer Luftfahrzeugstruktur (100).
